# EUROPEAN PATENT SPECIFICATION

(11) **EP 4 183 456 B1**
(45) Date of publication and mention of the grant of the patent: **29.01.2025**
(21) Application number: 22213432.2
(22) Date of filing: 27.11.2019
(51) Int. Cl.: A63B 21/012, A63B 21/02

(54) **A FLYWHEEL ARRANGEMENT FOR A MULTIFUNCTIONAL EXERCISE APPARATUS**
SCHWUNGRADANORDNUNG FÜR EIN MULTIFUNKTIONELLES ÜBUNGSGERÄT
AGENCEMENT DE VOLANT D'INERTIE POUR APPAREIL D'EXERCICE MULTIFONCTIONNEL

(30) Priority: 28.11.2018 DK PA201870784; 28.11.2018 DK PA201870785; 28.11.2018 DK PA201870786; 28.11.2018 DK PA201870787
(43) Date of publication of application: 24.05.2023
(62) Divisional of application: 19889235.8
(73) Proprietor: Danish Aerospace Company A/S, 5250 Odense SV (DK)
(72) Inventor: Hansen, Daniel Hasse Hagen, 5250 Odense SV (DK)
(74) Representative: Nordic Patent Service A/S

(56) References cited:
- EP-A2- 0 214 748
- WO-A2-2007/015096
- US-A- 4 880 224
- US-A1- 2006 148 622

## Description

### TECHNICAL FIELD

The disclosure relates to a flywheel arrangement for a multifunctional exercise apparatus.

### BACKGROUND

In microgravity, appearing in space, human muscles are in the slack state all the time, which accelerates muscular atrophy. Therefore, astronauts and space tourists need to exercise when they are on a mission or traveling in space for an extended period of time.

Earth-bound exercise apparatuses usually apply actual weights to provide resistance for the user. However, in microgravity it is necessary to obtain the resistance in other ways such as by means of stretchable cords, pneumatic cylinders, electric brakes, torque bands, etc.

A multifunctional exercise apparatus is disclosed in US 2014/0213414, which uses a pneumatic actuated resistance mechanism. The user interacts with the apparatus by grasping a bar connected to the pneumatic actuated resistance mechanism. In an alternative invention, disclosed in US 2018/0021614, the resistance mechanism is an electric resistance mechanism selected from a group consisting of a linear actuator brake, a linear actuator electromechanical brake, a linear actuator friction disc brake, a stepper motor brake, a servo motor brake, a servo motor electromagnetic brake, a servo motor friction disc brake, and an electric particle brake. US 2006/148622 A1 discloses a multifunctional exercise apparatus comprising a pulling rope connected to a flywheel providing variable and selectable resistance via an adjusting button.

Due to weight and space constraints, only a limited number of exercise apparatuses can be brought onboard a spaceship. Furthermore, some of the known resistance mechanisms have very large sizes and masses. Thus, astronauts and space tourists face a very limited choice of exercise apparatuses, and exercises, when in space.

### SUMMARY

It is an object of the present invention to provide an improved flywheel arrangement for a multifunctional exercise apparatus.The foregoing and other objects are achieved by the features of the independent claim. Further implementation forms are apparent from the dependent claims, the description, and the figures.

The invention relates to a flywheel arrangement for a multifunctional exercise apparatus, the flywheel arrangement comprising a flywheel rotatably positioned in a housing, a braking band arranged around a portion of the perimeter of the flywheel, and a tension adjusting mechanism comprising a moveable tension arm capable of adjusting the tension of the braking band and an electrical motor for operating the moveable tension arm, wherein the tension adjusting mechanism further comprises a knob for manual manipulation of the moveable tension arm, and a selector for enabling a user in a first position to operate the moveable tension arm with the electrical motor and in a second position to operate the moveable tension arm with the knob.

Normally, the selector is in the first position to allow the electrical motor to operate the moveable tension arm. However, in case of power loss, failure of the electrical motor, or failure in the electronics controlling the regulation the electrical motor can no longer adjust the tension of the braking band. The present invention offers a contingency mode in case the electric regulation system can no longer be used for adjusting the workload. The contingency system works by pushing the selector into the second position, thereby allowing the manual manipulation of the knob to operate the moveable tension arm and thus the adjustment of the braking band.

In an embodiment of the invention, a midsection of the movable tension arm is turnably attached to the housing, an end section of the moveable tension arm is tensioning the braking band, and the other end section is caused to move by the rotation of a tension arm shaft. The design of the movable tension arm allows for a longer travel distance and a higher pull force on the braking band. Furthermore, this design allows only one movable tension arm to be used while still having full manual knob capability.

In an implementation of the invention, the tension arm shaft is rotated by the electrical motor which is a stepper motor. A force sensor may measure how hard the stepper motor is pulling on the braking band whereas another force sensor measures the actual braking torque on the flywheel. The sensor data will be used by the stepper motor to adjust intensity level for, e.g., cycling, rowing and rope pulling.

The revolutions of the stepper motor axle may be transferred to a movement of the movable tension arm by fixing one end of the movable tension arm on a sled and providing a nut on the sled. When a threaded axle of the stepper motor is engaged in the nut, the tension of the braking band may be adjusted by the action of the stepper motor.

In some embodiments of the invention the knob is mounted on the tension arm shaft. In a preferred embodiment, the manual knob is engaged with the tension arm shaft by sliding of a floating shaft.

Suitably, the floating shaft is provided with gears at each end capable of meshing with a gear connected to the manual knob at one end of the floating shaft and a gear positioned on the tension arm shaft at the other end of the floating shaft. The use of a floating shaft prevents the manual knob from being turned by the stepper motor when it is not desired. When the selector is in the second position, the manual knob engages directly with the tension arm shaft via the floating shaft. When the selector is in the second position the manual knob will be disengaged and will not be turned by the stepper motor.

In a preferred implementation of the invention, the floating shaft is operated by the selector, the selector being a manual knob slider. The manual knob slider is preferably positioned on the outside of the housing for easy manipulation by a user. The manual knob slider has attached an arm protruding into the housing ending in a fork capable of engaging with a recess on the floating shaft for moving the shaft in dependence of the position chosen.

In a preferred aspect, the two gears on the floating shaft are slightly unaligned relative to the gear connected to the manual knob and the gear positioned on the tension arm shaft, so that one gear set meshes before the other. The slight misalignment eases meshing as it occurs in two steps.

In an embodiment of the invention, the flywheel comprises a planetary gearing. The planetary gearing achieves a desired inertia while keeping flywheel mass and size down. Preferably, all gears are stainless steel gears.

Preferably, the spokes of the flywheel are configured to act as a fan. The function of a fan may be obtained by making the spokes have a height of about the same as the rim of the flywheel. Furthermore, a fan-action may be obtained by angulation of the spokes. Preferably, the spokes that are angled to assist in dissipation of heat from the flywheel is now acting as a fan. The fan is preferably pulling cold air in from the electronics side and blowing it out through the front of the module.

In an embodiment of the invention, the perimeter of the flywheel is provided with teeth for allowing a speed sensor to measure the velocity. The sensor can be adjusted to emit a pulse every time a tooth passes the read head. The sensor data may be used for adapting the tension of the flywheel.

These and other aspects will be apparent from the embodiments described below.

### BRIEF DESCRIPTION OF THE DRAWINGS

Fig. 1 discloses the multifunctional exercise apparatus in its first position,
Fig. 2 discloses the first module in which the lid has been removed for showing the cable reel system (not part of the invention),
Fig. 3 shows the flywheel with the lid of the second module removed,
Fig. 4 shows a second position for the first and second modules in which the torque resistance mechanism of the first module may be operated independently of the action of the flywheel,
Fig. 5 discloses a third position of the first and second modules,
Fig. 6 shows an axle fitted with pedal arms and pedals at each end,
Fig. 7 shows the biking seat for use in the cycling mode,
Fig. 8 shows the multifunctional exercise apparatus configured in the cycling mode,
Fig. 9 shows the multifunctional exercise apparatus configured in the rowing mode,
Fig. 10 shows the multifunctional exercise apparatus configured in the "dual rope mode".
Fig. 11 discloses the rope pulling unit connected to the multifunctional exercise apparatus,
Fig. 12 shows the rope pulling unit containing an endless rope,
Fig. 13 shows the cable reel system in an exploded view (not part of the invention),
Fig. 14 discloses the cable reel system in a cross-sectional view (not part of the invention),
Fig. 15 shows an exploded view of the torque resistance mechanism (not part of the invention),
Fig. 16 shows the coupling mechanism being engaged with the rotor of the electrical torque motor/generator (not part of the invention),
Fig. 17 shows the coupling mechanism being engaged with the rotor of the torsional spring (not part of the invention),
Fig. 18 discloses the lid and the spring rotor of the torsional spring in exploded view (not part of the invention),
Fig. 19 shows the spring housing of the torsional spring mounted rotatably in the housing of the torque resistance mechanism (not part of the invention),
Fig. 20 discloses the second position in which the hub of the torque resistance mechanism is lifted (not part of the invention),
Fig. 21 shows the first position in which the hub of the torque resistance mechanism is lowered (not part of the invention),
Fig. 22 shows a part of the second module in an exploded view,
Fig. 23 discloses the tension adjusting mechanism in the first position.

### DETAILED DESCRIPTION

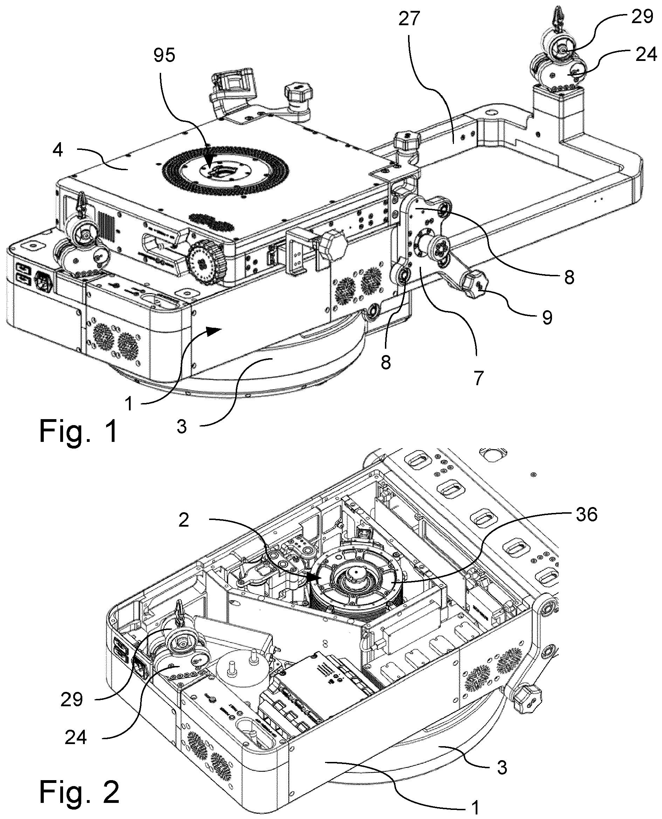

Figure 1 discloses a multifunctional exercise apparatus in its first position, i.e. in a position in which the force experienced by the user of the apparatus is obtained by the combined effect of a torque resistance mechanism 3 and a flywheel 5. A first module 1 of the multifunctional exercise apparatus has an essentially box shape with rounded corners. Figure 2 discloses the first module 1 with a removed lid for showing a cable reel system 2. The cable reel system 2 is operably connected to the torque resistance mechanism 3 that provides resistance when a cable 39 of the cable reel system 2 is pulled and that returns the cable 39 to a wound position on one of cable reels 36,37 when the cable 39 is not pulled.

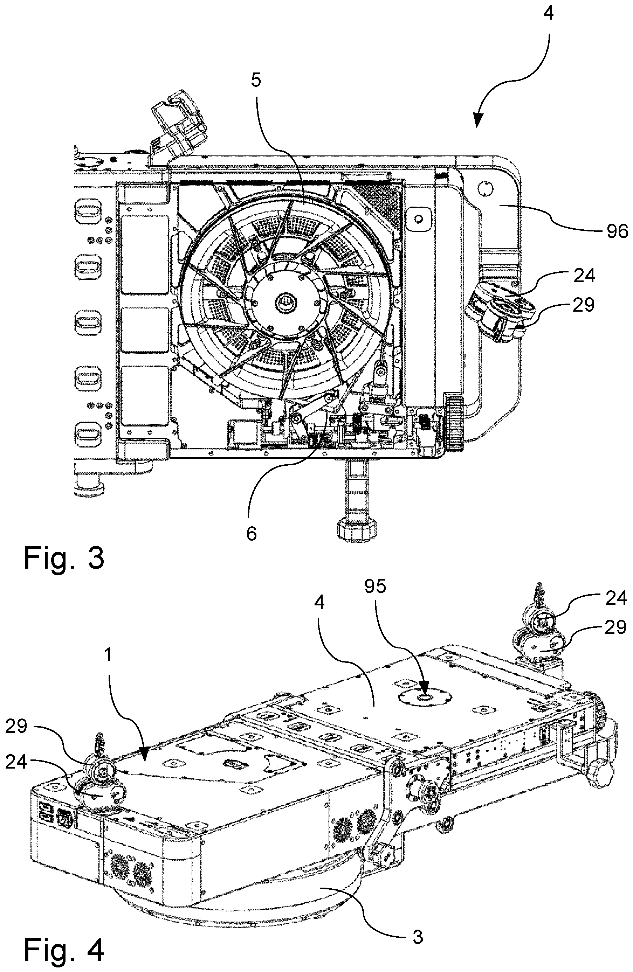

The multifunctional exercise apparatus furthermore comprises a second module 4. The second module 4 has an essentially box shape with slightly rounded corners. In figure 3, the lid of the second module has been removed to show the flywheel 5 contained within the box shaped module. Around a part of the perimeter of the flywheel 5, a braking band 6 is positioned for providing resistance to the inertia produced by the flywheel 5.

The first 1 and the second 4 modules can be arranged in at least two different positions as shown in figure 1 and figure 4, respectively. Figure 1 shows a first position in which the torque resistance mechanism 3 of the first module 1 is operably connected to the flywheel 5 positioned in the second module 4, i.e. the second module 4 is positioned on top of the first module 1. Figure 4 shows a second position for the first 1 and second 4 modules in which the torque resistance mechanism 3 of the first module can be operated independently of the action of the flywheel 5 of the second module 4 when a user pulls a cable 39 of the cable reel system 2.

The connection of the torque resistance mechanism 3 with the flywheel 5 may be performed by providing the torque resistance mechanism 3 with a first part of a coupling mechanism such as a hub 53 and the flywheel 5 with a second part of the coupling mechanism, such as a hub 95, whereby the hubs 53, 95 are positioned coaxially when the modules are in the first position for enabling an operable connection when an axle such as shaft 42 is provided in the hubs 53, 95.

The first module 1 and the second module 4 are connected along an edge of each of the modules by a hinge 7. The hinge 7 allows the first 1 and the second 4 modules to be moved relative to each other so as to obtain the first and second positions. The hinge 7 is a double hinge allowing a major surface of the first module 1 to extend flush with a major surface of the second module 4, thereby providing a platform for the user to, e.g., stand on. The double hinge includes two pivot joints 8 for pivoting the second module 4 to different positions relative to the first module 1. A handle 9 is provided for assisting the user in positioning the second module 4 in the desired position. The hinge 7 may be locked in a certain position to maintain the desired position of the modules 1, 4 during an exercise.

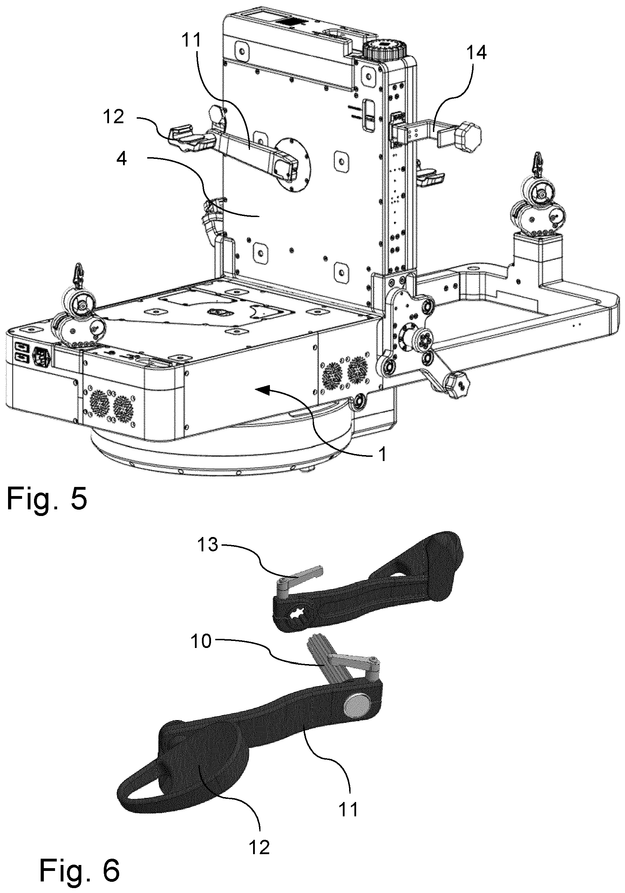

Figure 5 discloses a third position of the first 1 and second 4 modules relative to each other. In the third position, a main extent of the first module 1, i.e. the surface pointing vertically upwards in figure 5, is perpendicular to a main extent of the second module 4. The hub 95 of the second module 4 is provided with a through-going splined axle 10 fitted with pedal arms 11 and pedals 12 at each end when the first 1 and second 4 modules are in the third position. The pedal arms 11 are provided with snap locks 13 for fast and efficient mounting and dismounting of the equipment necessary for performing a cycling exercise.

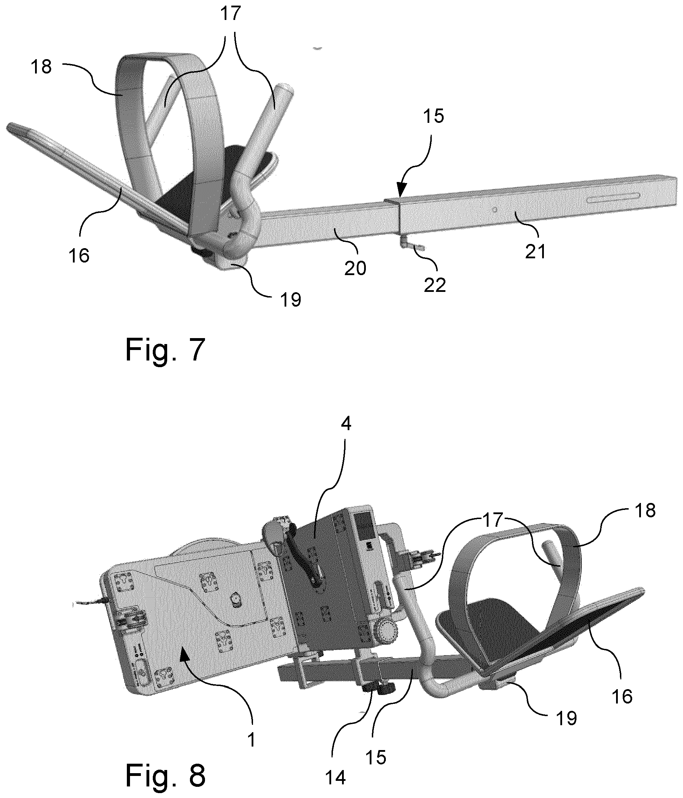

The second module 4 is provided with engaging means 14 for accommodating a seat post 15. Optionally, a second engaging means may be positioned on the hinge 7 for allowing the seat post 15 to be attached at two positions in order to obtain higher stability. The seat is provided with a back support 16, the angle of which can be adjusted. Additionally, the back support 16 may have 5-10 degrees of spring-loaded flex that can be enabled and disabled. For biking, the seat will be configured as shown in figure 7. The back support 16 will be used in combination with handles 17 to achieve a posture similar to a recumbent exercise ergometer. The back support 16 may be locked or allowed to flex depending on user preference. The seat post 15 comprises a waist strap 18 to keep the user down on the seat during exercise at microgravity. For biking, waist strap 18 can be used either in combination with, or instead of, handles 17. The inertia of the flywheel 5 makes it possible to adjust the workload in a way that feels similar to bicycling on ground.

In one embodiment, the flywheel 5 is configured such that it continues to spin while the pedals 12 stay stationary when the user stops pedaling. This is possible due to a one-way bearing connecting the flywheel 5 to the axle 10.

For rowing, when the modules are in the first position, the back support 16 will generally be positioned in a more upright position. The spring-loaded flex of the back support 16 will provide the user with tactile feedback that they should not extend further when they feel the seat without hitting a "rigid wall". In rowing, the waist strap 18 is a necessity since the force from the cable 39 will generate a rotation away from the seat.

The seat is mounted on a carriage 19 that can slide on an inner tube 20 of the seat post 15 to allow the user to perform the rowing exercise. The sliding function can be locked in a top position when the apparatus is used for the cycling exercise. The inner tube 20 can be adjusted freely in an outer tube 21 and locked in any position with a snap lock 22 on the outer tube 21.

Fig. 8 show the multifunctional exercise apparatus configured in the cycling mode. The user initially is positioned in the seat by securing the strap 18 around the waist. Subsequently, cycling shoes (not showed) having clamps corresponding to the pedal locking system are clicked into the pedals 12.

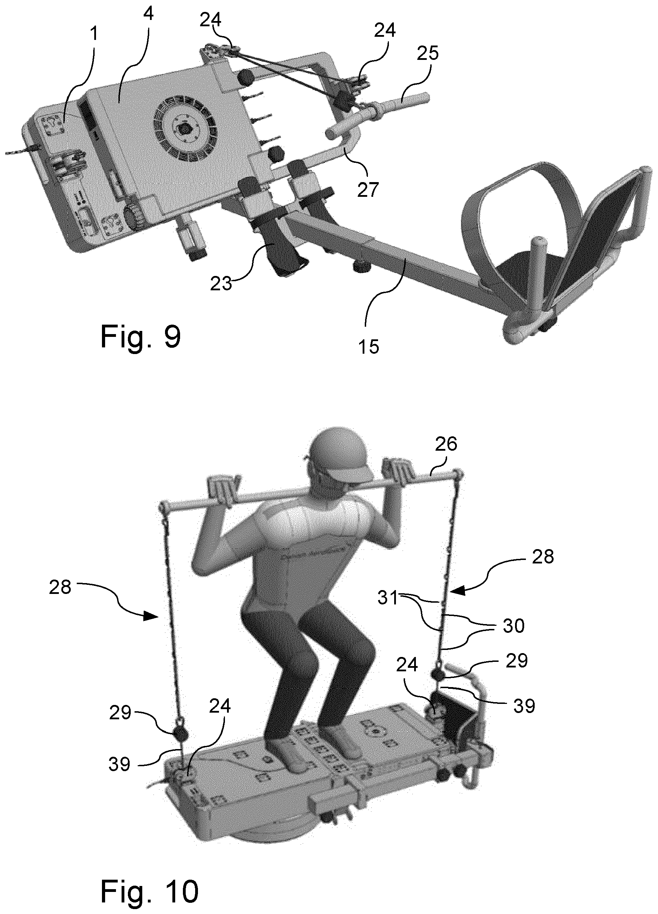

Figure 9 shows the multifunctional exercise apparatus configured in the rowing mode. For rowing, separate footplates 23 are installed. These footplates 23 are needed for foot fixation and to achieve a suitable geometry, where the feet are below the seat and below the cable 39 exit points, i.e. the points where cables 39 exit the first module housing and the frame 27 such that the user can grasp them. The footplates 23 also angle the feet correctly and they allow the user to bend his/her toes without falling out of the feet fixation. The frame 27, extending from the first module 1 and serving as support for the second module 4 in other configurations, is provided with a swivel 24. Similarly, the platform, formed by the first 1 and second 4 modules when arranged in the second position, is provided with a swivel 24. The cable 39, attached to a rowing handle 25 at one end, is guided by the swivels 24 to the cable reel system 2 which is operably connected to the torque resistance mechanism 3. When the user pulls at the rowing handle 25, he/she will experience the combined forces exerted by the torque resistance mechanism 3 and the flywheel 5 with brake 6.

When performing resistive exercises, the user can choose to use both cables 39 exiting from the sides of the platform formed by the first 1 and second 4 modules when arranged in the second position. This will typically be done with a wide bar 26 used for heavy exercises such as squat, bench press, and deadlift. It can also be used for bicep curls and other lighter exercises if desired. The "dual rope mode" is illustrated in Fig. 10 with the squat exercise as an example. The swivels 24 are positioned at each end of the platform formed by the upper surface of the first module 1 arranged flush with the upper surface of the second module 4. Each cable 39 from the cable reel system 2 is guided by the swivels 24 to a specific add-on selected by the user. In Fig. 10, the user has selected a wide bar 26 connected to slack lines 28 at each end. The slack lines 28 are safer when the wide bar 26 is used for "under bar" exercises, i.e. exercises where the user has placed his/her body underneath the bar or handle. The slackline 28 is a piece of rope installed between the handle and a mechanical end stop 29 provided at an end of cable 39. This extra rope can never be pulled into the machine and acts as a safety feature for the user. It works by ensuring that the user cannot be forced into a dangerous position between the handle/bar and the platform, i.e. when a squat is performed the slack line 28 stops the machine from pulling the handle/bar lower than the lowest position of the squat. The slack lines 28 also make it easier for the user to achieve a better position for initiating certain exercises. The slack line 28 has a number of rubber sleeves 30 arranged around it to stiffen the rope slightly with alternating loops 31 between the rubber sleeves 30 for allowing the end of the handle/bar to engage with the slack line 28. During the squat exercise, the forces exerted by the torque resistance mechanism 3 are experienced by the user and not the flywheel 5.

The swivel 24 allows the cable 39 to be pulled in any direction within a semi-sphere with its origin in the swivel 24. This flexibility makes it possible to use a wide range of add-ons, including a single hand handle for exercises using a single cable 39, such as triceps extensions, twisting exercises, or other asymmetrical exercises. To use one cable 39, the other cable 39 is simply left untouched at its end stop. A single hand handle is then attached to the single cable end stop 29. A slack line 28 is generally not needed since the user cannot get caught under the handle.

Instead of using the main cable exit points, the swivels 24 can also be attached to further attachment points on the exercise unit. The handle can then be connected to the cable end stop 29 as described above. This way, the cable is now in "Single Rope" mode but extending from a different position on the platform.

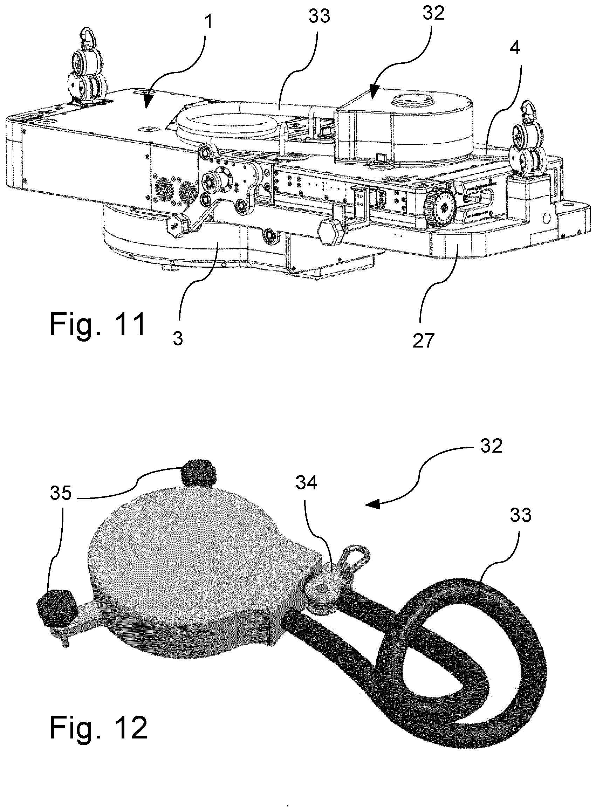

Figures 11 and 12 show a rope pulling unit 32 for connection with the flywheel 5 in the second module 4. The rope pulling unit 32 contains an endless rope 33. This rope 33 is driving an axle mounted in the hub 95 of the second module 4. Thus, the rope 33 will pull the flywheel 5 into motion with the possibility to do hand over hand pulling. The rope pulling unit 32 will preferably have a pulley 34 slidingly mounted on the rope 33 and be used for fixing a section of the endless rope 33 to the platform. Furthermore, the pulley 34 is adapted for the thicker rope usually used for rope pulling. The rope pulling unit 32 is releasably attached to the second module 4 by turning bolts 35. The head of the bolt 35 has a size and form easy for the human hand to manipulate.

The resistance of the endless rope 33 is adjusted by the braking band 6. As opposed to the finite cable stroke used in rowing, the rope 33 in the rope pulling add-on is endless (a closed loop) and can be pulled an "infinite" amount. The rope 33 is guided to a center attachment point by the pulley 34.

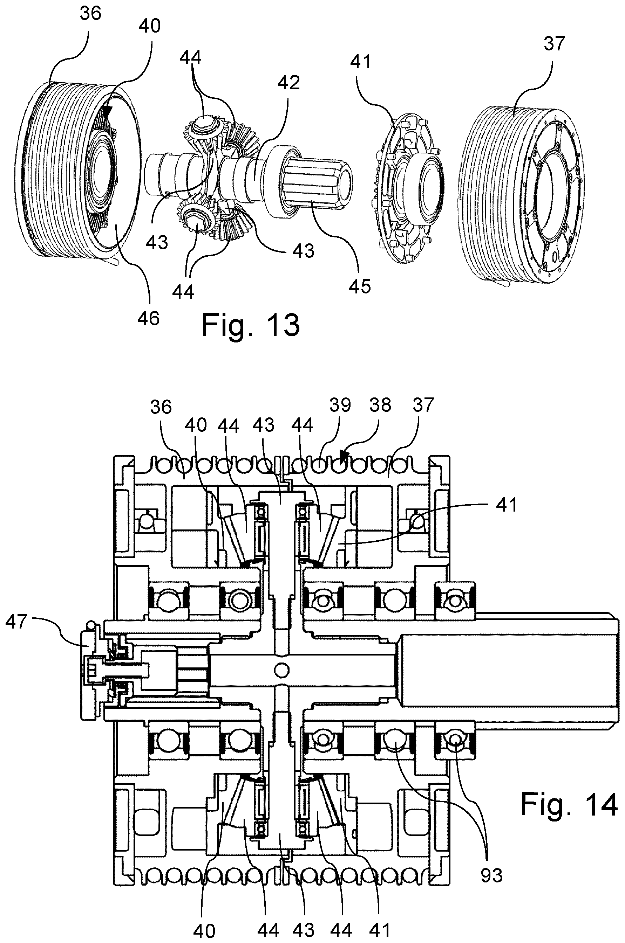

Figures 13 and 14 show the cable reel system 2. An upper cable reel 36 facing the second module 4 and a lower cable reel 37 facing the torque resistance mechanism 3 are both provided, on their outer circumference, with grooves 38 for accommodating a cable 39. On a side of the upper cable reel 36 facing the lower cable reel 37, a ring gear 40 is provided, and on a side of the lower cable reel 37 facing the upper cable reel 36 another ring gear 41 is provided. The upper and lower cable reels 36, 37 are rotatably journaled on a shaft 42. Between the upper 36 and the lower 37 cable reels, the shaft 42 is provided with four carriers 43 extending in the radial direction from the shaft 42 center axis. In the upper end of the carriers 43, pinion gears 44 are rotatably journaled and configured to mesh with both of the two ring gears 40, 41. While the four pinion gears 44 each rotate freely around their respective axis, they also follow the rotation of the shaft 42. Thus, if the shaft 42 is stationary and one reel 36, 37 is rotated clockwise, then the other reel 37, 36 will rotate counterclockwise. If one reel 36, 37 is stationary, the other reel 37, 36 will follow the rotation of the shaft 42 and hub 46. The moving reel will move twice as fast as the shaft 42 and hub 46 though. If both reels 36,37 are moved at the same speed, then the shaft 42 and hub 46 will follow their rotation 1:1. As a result of this mechanism, the torque on the shaft 42 will always be divided equally between each reel 36, 37.

The upper 36 and lower 37 cable reels are journaled on the shaft 42 using ball bearings 93. The ball bearings 93 are of stainless steel using non-contact metal seals. This type of seal keeps the grease in place while providing the least amount of friction.

At the end of the shaft 42 that is designed for engagement with the torque resistance mechanism 3, a splined part 45 is provided. At the other end of the shaft 42, the hub 46 is provided for engagement with a corresponding axle. When the hub 46 is not engaged with an axle it may be provided with a cap 47.

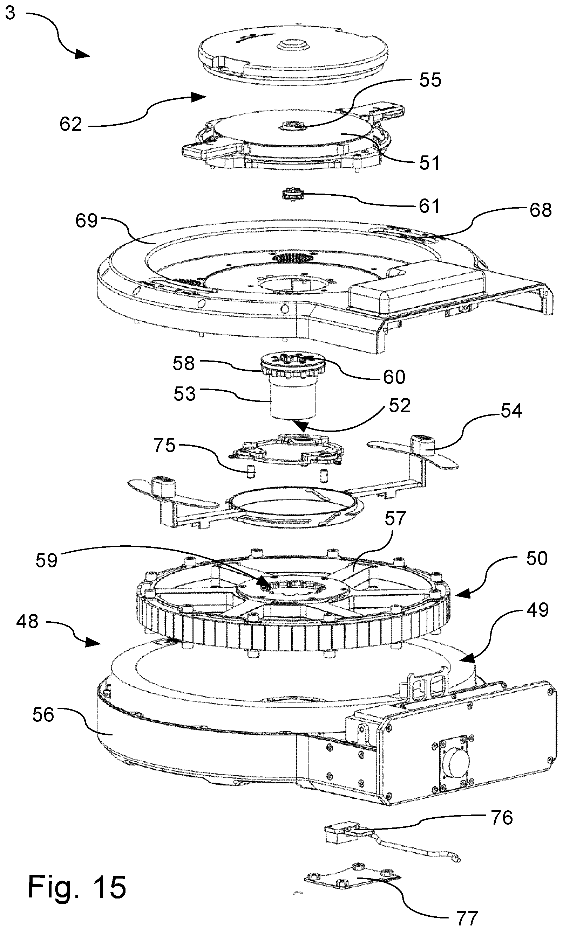

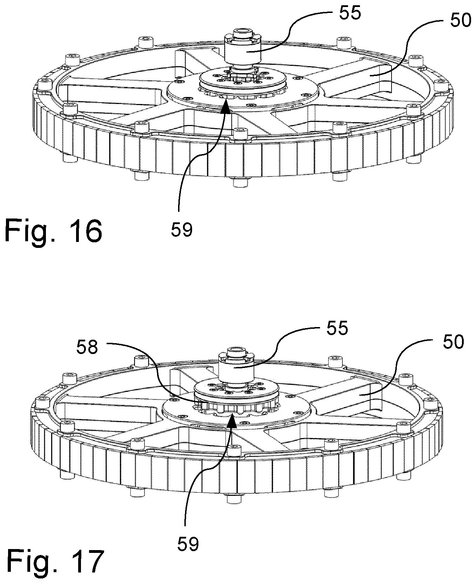

Figure 15 shows an exploded view of the torque resistance mechanism 3. The electrical torque resistance mechanism 3 comprises an electrical torque motor/generator 48 comprising a stator 49 and a rotor 50. In a hollow space defined by the stator 49, a torsional spring 51 is accommodated with the rotor 50. The electrical torque resistance mechanism 3 also comprises a part of a coupling mechanism, which may be selected as a hub 53 having a cavity 52 capable of mating with another part of a coupling mechanism, such as the shaft 42 of the cable reel system 2. Generally, the shaft 42 is splined, and the hub 53 contains complementing grooves for accommodating the shaft 42. The electrical torque resistance mechanism 3 also comprises a selector 54 capable of being moved to at least two positions. In a first position, illustrated in Figure 16, the coupling mechanism is engaged with the rotor 50 of the electrical torque motor/generator 48 and in a second position, illustrated in Figure 17, the coupling mechanism is engaged with a spring rotor 55 of the torsional spring 51.

The stator 49 is attached to a lower part of a first housing 56 and the rotor 50 is rotatably arranged in the hollow space defined by the essentially annular stator 49. The rotor 50 is provided with spokes 57 for connecting the rim of the rotor 50 with the center of the rotor 50. The center of the rotor 50 is provided with a recess 59 capable of being engaged with a part of the coupling mechanism, such as the hub 53. The hub 53 may be provided on an outer circumference with a plurality of teeth 58 or "dog teeth" that mate with matching openings machined or otherwise provided in the recess 59 at the center of the rotor 50.

The coupling mechanism is a hub 53 capable of being moved in axial direction between a first position for engagement with the electrical torque motor/generator 48 and a second position for engagement with the torsional spring 51. When the circumferential teeth 58 of the hub 53 are engaged with the corresponding recess 59 in the rotor center the engagement is locked. However, when a user moves the selector 54 it causes the hub 53 to move in an axial direction and thereby disengage the connection between the hub 53 and the electrical torque motor/generator 48. An upper section of the hub 53 is provided with a recessed rosette 60 having a shape complementary to the shape of a dog teeth gear 61 connected to the spring rotor 55 of the torsional spring 51.

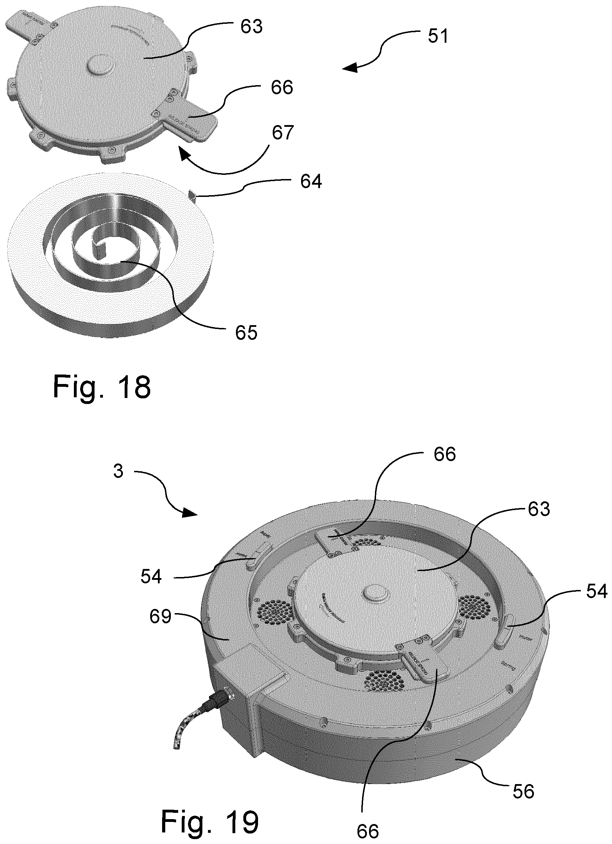

The torsional spring 51 is positioned in a separate, second spring housing 62 mounted rotatably in the first housing 56 of the electric torque resistance mechanism 3. Figure 18 shows the lid 63 of the spring housing 62 comprising a not shown pole protruding from the back side of the lid 63 for engagement with a hook 64. One end of spiral torsion spring 65 is engaged with rotor 55. Thus, when the dog teeth gear 61 provided on the spring rotor 55 is engaged with the rosette 60 of the hub 53, the user can perform exercises using the spiral torsion spring 65 as load.

Before the user can use the spiral torsion spring 65 as load it needs to be tensioned. The tensioning is performed by rotating the spring housing 62. To help the user twist the spring housing 62, it is provided with handles 66 attached to the lid 63. The handles 66 are provided with a lock 67 for preventing the spring housing 62 from spinning back to a relaxed position. After usage, the tensioning of the spiral torsion spring 65 may be relaxed by deactivating the lock 67.

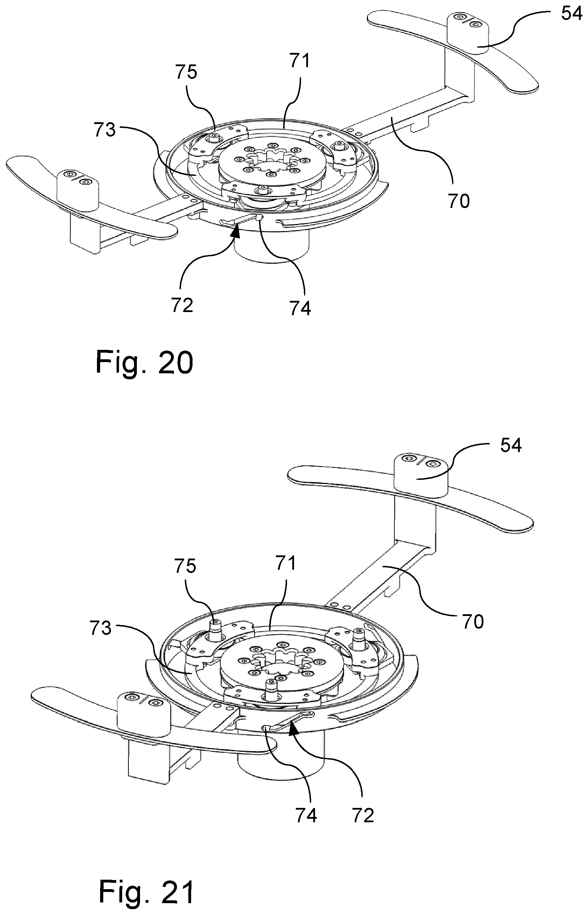

A toggle mechanism for moving the hub 53 in axial direction between the two positions is shown in detail in Figure 20 and Figure 21. The selectors 54 protrude through the openings 68 in the lid 69 of the first housing 56 comprising the electrical torque motor/generator 48. The selector 54 may be moved between a first position termed "motor" and a second position termed "spring" by the user. When the selector 54 is moved, arms 70 turn a shift collar 71 provided with traces 72. An axially moveable ring 73 is provided with radially extending pins 74 positioned in the traces 72. Since shift ring columns 75 are fixed to the lid 69, the ring 73 will move axially when the selector 54 is moved between positions. Figure 20 shows the second position in which the hub 53 is lifted and in which the rosette 60 will mesh with the dog teeth gear 61 provided on the spring rotor 55. Figure 21 shows the first position in which the hub 53 is lowered and the circumferential dog teeth 58 of the hub 53 are caused to mesh with the recess 59 of the rotor 50 of the electrical torque motor/generator 48.

The rotor 50 of the electrical torque motor/generator 48 is provided with an optical read head for an encoder 76. For increased serviceability of the encoder, a lid 77 is provided. The encoder may be selected as Renishaw RESOLUTE^{™} absolute encoder with the RESA30 rotary ring provided on the rotor.

The hub 53 may be provided with a further engagement mechanism for the second position (not shown).

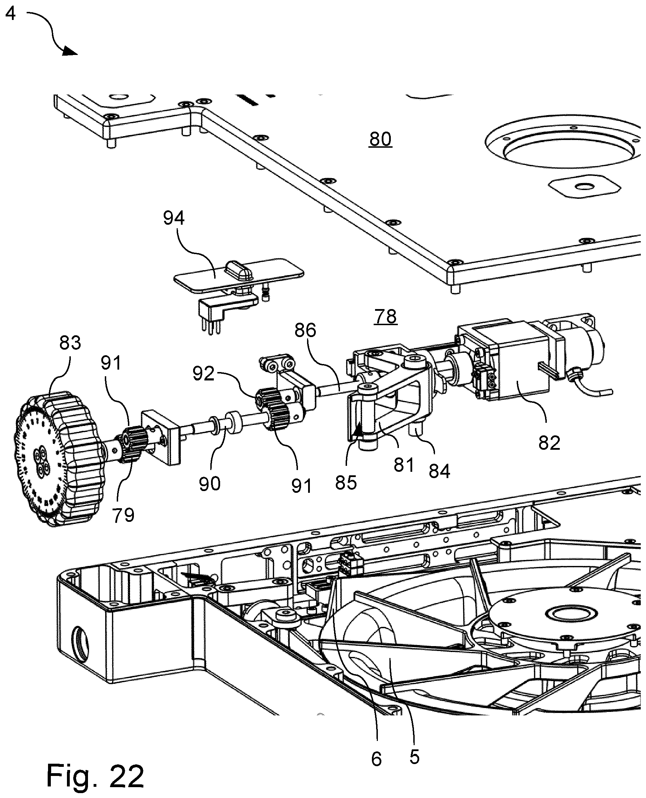

Figure 22 shows a part of the second module 4 in an exploded view. The exploded view extracts a tension adjusting mechanism 78 from the second module 4 and a manual knob slider 94 from lid 80 of the second module 4. The flywheel 5 is rotatably provided in the second module 4. The braking band 6 is arranged around a portion of the perimeter of the flywheel 5. The tension adjusting mechanism 78 comprises a moveable tension arm 81 capable of adjusting the tension of the braking band 6 and an electrical motor 82, e.g. a stepper motor, for operating the moveable arm 81. The tension adjusting mechanism 78 comprises a knob 83 for manual manipulation of the movable tension arm 81. The tension adjusting mechanism 78 also comprises a selector, i.e. manual knob slider 94, for enabling a user in a first position to operate the moveable tension arm 81 with the electrical motor 82 and in a second position to operate the moveable tension arm 81 with the knob 83.

The movable tension arm 81 is bended and, in a midsection 84, attached to a housing. One end of the movable tension arm 81, pointing towards the flywheel 5, is provided with a slot 85 for guiding and tensioning the braking band 6. The slot 85 may be provided with a roller to reduce the resistance between the slot 85 and braking band 6. The other end of the movable tension arm 81 is caused to move by the rotation of a tension arm shaft 86. The tension arm shaft 86 is rotated by the electrical motor 82. The revolutions of the electrical motor axle 87 may be transferred to movement of the movable tension arm 81 by fixing one end of the movable tension arm 81 on a sled 88 and providing a nut 89 on the sled 88. When the threaded axle 87 of the electrical motor 82 is engaged in the nut 89, the tension of the braking band 6 may be adjusted by the action of the electrical motor 82.

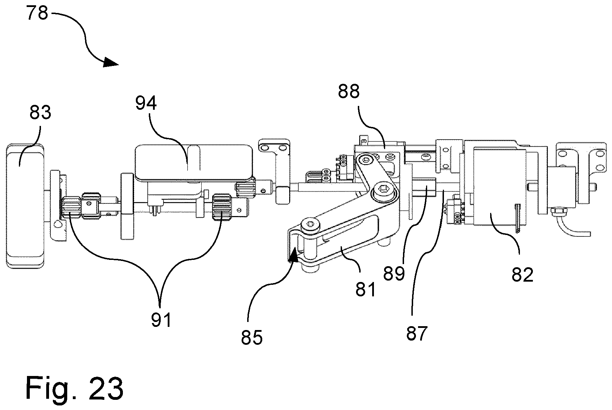

The manual knob 83 is provided with an axle having a gear 79 at the opposing end of the axle. The gear 79 may be engaged with the movable tension arm 81 by sliding a floating shaft 90 provided with gears 91 at each end. Figure 23 shows the tension adjusting mechanism 78 in the first position, i.e. where the manual manipulation is disengaged, and figure 22 shows the tension adjusting mechanism 78 in the second position, i.e. where the knob 83 is engaged and has full control of the movable tension arm 81 regardless of the position of the electrical motor 82. The two gears 91 on the floating shaft 90 are slightly unaligned relative to the gear 79 connected to the knob 83 and a gear 92 positioned on the tension arm shaft 86, so that one gear set meshes before the other.

In this embodiment, structures and features that are the same or similar to corresponding structures and features previously described or shown herein are denoted by the same reference numeral as previously used for simplicity.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims.

The invention is further defined in the appended claims.

## Claims

1. A flywheel arrangement for a multifunctional exercise apparatus, the flywheel arrangement comprising a flywheel (5) rotatably positioned in a housing (96), a braking band (6) arranged around a portion of the perimeter of the flywheel (5), and a tension adjusting mechanism (78) comprising a moveable tension arm (81) capable of adjusting the tension of the braking band (6) and an electrical motor (82) for operating the moveable tension arm (81),
wherein the tension adjusting mechanism (78) further comprises a knob (83) for manual manipulation of the moveable tension arm (81), and a selector (94) for enabling a user in a first position to operate the moveable tension arm (81) with the electrical motor (82) and in a second position to operate the moveable tension arm (81) with the knob (83).

2. The flywheel arrangement according to claim 1, wherein a midsection (84) of the movable tension arm (81) is turnably attached to the housing (96), an end section of the moveable tension arm (81) is tensioning the braking band (6), and the other end section is caused to move by the rotation of a tension arm shaft (86).

3. The flywheel arrangement according to claim 2, wherein the tension arm shaft (86) is rotated by the electrical motor (82) which is a stepper motor.

4. The flywheel arrangement according to claim 2 or 3, wherein the manual knob (8) is engaged with the tension arm shaft (86) by sliding of a floating shaft (90) .

5. The flywheel arrangement according to claim 4, wherein the floating shaft (90) is provided with gears (91) at each end capable of meshing with a gear (79) connected to the manual knob (83) at one end of the floating shaft (90) and a gear (92) positioned on the tension arm shaft (86) at the other end of the floating shaft (90).

6. The flywheel arrangement according to any one of the claims 4 or 5, wherein the floating shaft (90) is operated by the selector (94), the selector (94) being a manual knob slider.

7. The flywheel arrangement according to claim 5 or 6, wherein the two gears (91) on the floating shaft (90) are slightly unaligned relative to the gear (79) connected to the manual knob (83) and the gear (92) positioned on the tension arm shaft (86), so that one gear set meshes before the other.

8. The flywheel arrangement according to any one of the previous claims, wherein the flywheel (5) comprises planetary gearing.

9. The flywheel arrangement according to any one of the previous claims, wherein spokes (57) of the flywheel (5) (5) are configured to act as a fan.

10. The flywheel arrangement according to any one of the previous claims, wherein the perimeter of the flywheel (5) is provided with teeth for allowing a speed sensor to measure the velocity.

## Patentansprüche

1. Schwungradanordnung für eine multifunktionale Trainingsvorrichtung, wobei die Schwungradanordnung ein Schwungrad (5), das drehbar in einem Gehäuse (96) positioniert ist, ein Bremsband (6), das um einen Abschnitt des Umfangs des Schwungrades (5) angeordnet ist, und einen Spannungseinstellmechanismus (78) umfasst, der einen beweglichen Spannungsarm (81), der fähig ist, die Spannung des Bremsbandes (6) einzustellen, und einen Elektromotor (82) zum Betätigen des beweglichen Spannungsarms (81) umfasst,
wobei der Spannungseinstellmechanismus (78) ferner einen Knopf (83) zur manuellen Manipulation des beweglichen Spannungsarms (81) und einen Wähler (94) umfasst, der einen Benutzer in die Lage versetzt, in einer ersten Stellung den beweglichen Spannungsarm (81) mit dem Elektromotor (82) zu betätigen und in einer zweiten Stellung den beweglichen Spannungsarm (81) mit dem Knopf (83) zu betätigen.

2. Schwungradanordnung nach Anspruch 1, wobei ein Mittelabschnitt (84) des beweglichen Spannungsarms (81) drehbar am Gehäuse (96) angebracht ist, ein Endabschnitt des beweglichen Spannungsarms (81) das Bremsband (6) spannt und der andere Endabschnitt veranlasst wird, sich durch die Drehung einer Spannungsarmwelle (86) zu bewegen.

3. Schwungradanordnung nach Anspruch 2, wobei die Spannungsarmwelle (86) durch den Elektromotor (82) gedreht wird, der ein Schrittmotor ist.

4. Schwungradanordnung nach Anspruch 2 oder 3, wobei der Handknopf (8) durch Schieben einer gleitenden Welle (90) mit der Spannungsarmwelle (86) in Eingriff gebracht wird.

5. Schwungradanordnung nach Anspruch 4, wobei die gleitende Welle (90) an jedem Ende mit Zahnrädern (91) versehen ist, die fähig sind, an einem Ende der gleitenden Welle (90) in ein Zahnrad (79), das mit dem Handknopf (83) verbunden ist, und am anderen Ende der gleitenden Welle (90) in ein Zahnrad (92) einzugreifen, das auf der Spannungsarmwelle (86) positioniert ist.

6. Schwungradanordnung nach irgendeinem der Ansprüche 4 oder 5, wobei die gleitende Welle (90) durch den Wähler (94) betätigt wird, wobei der Wähler (94) ein Handschieberknopf ist.

7. Schwungradanordnung nach Anspruch 5 oder 6, wobei die zwei Zahnräder (91) auf der gleitenden Welle (90) relativ zum Zahnrad (79), das mit dem Handknopf (83) verbunden ist, und dem Zahnrad (92), das auf der Spannungsarmwelle (86) positioniert ist, geringfügig unausgerichtet sind, sodass ein Zahnradsatz vor dem anderen im Eingriff ist.

8. Schwungradanordnung nach irgendeinem der vorherigen Ansprüche, wobei das Schwungrad (5) Planetengetriebe umfasst.

9. Schwungradanordnung nach irgendeinem der vorherigen Ansprüche, wobei Speichen (57) des Schwungrades (5) konfiguriert sind, als Lüfter zu wirken.

10. Schwungradanordnung nach irgendeinem der vorherigen Ansprüche, wobei der Umfang des Schwungrades (5) mit Zähnen versehen ist, um es einem Geschwindigkeitssensor zu ermöglichen, die Geschwindigkeit zu messen.

## Revendications

1. Agencement de volant d'inertie pour un appareil d'exercice multifonctionnel, l'agencement de volant d'inertie comprenant un volant d'inertie (5) positionné en rotation dans un logement (96), une bande de freinage (6) disposée autour d'une partie du périmètre du volant d'inertie (5), et un mécanisme de réglage de tension (78) comprenant un bras de tension mobile (81) capable de régler la tension de la bande de freinage (6) et un moteur électrique (82) pour actionner le bras de tension mobile (81), dans lequel le mécanisme de réglage de tension (78) comprend en outre une mollette (83) pour la manipulation manuelle du bras de tension mobile (81), et un sélecteur (94) pour permettre à un utilisateur dans une première position d'actionner le bras de tension mobile (81) avec le moteur électrique (82) et dans une deuxième position d'actionner le bras de tension mobile (81) avec la mollette (83).

2. Agencement de volant d'inertie selon la revendication 1, dans lequel une section centrale (84) du bras de tension mobile (81) est fixée au logement (96) de manière à pouvoir tourner, une section d'extrémité du bras de tension mobile (81) tend la bande de freinage (6), et l'autre section d'extrémité se déplace du fait de la rotation d'un arbre (86) de bras de tension.

3. Agencement de volant d'inertie selon la revendication 2, dans lequel l'arbre (86) de bras de tension est tourné par le moteur électrique (82) qui est un moteur pas-à-pas.

4. Agencement de volant d'inertie selon la revendication 2 ou 3, dans lequel la mollette (8) manuelle est engagée avec l'arbre (86) de bras de tension par le glissement d'un arbre flottant (90) .

5. Agencement de volant d'inertie selon la revendication 4, dans lequel l'arbre flottant (90) est doté d'engrenages (91) à chaque extrémité capables de se mettre en prise avec un engrenage (79) relié à la mollette manuelle (83) à une extrémité de l'arbre flottant (90) et un engrenage (92) positionné sur l'arbre (86) de bras de tension à l'autre extrémité de l'arbre flottant (90).

6. Agencement de volant d'inertie selon l'une quelconque des revendications 4 ou 5, dans lequel l'arbre flottant (90) est actionné par le sélecteur (94), le sélecteur (94) étant un curseur à mollette manuelle.

7. Agencement de volant d'inertie selon la revendication 5 ou 6, dans lequel les deux engrenages (91) sur l'arbre flottant (90) sont légèrement non-alignés par rapport à l'engrenage (79) relié à la mollette manuelle (83) et à l'engrenage (92) positionné sur l'arbre (86) de bras de tension, de façon à ce qu'un jeu d'engrenages se mette en prise avant l'autre.

8. Agencement de volant d'inertie selon l'une quelconque des revendications précédentes, dans lequel le volant d'inertie (5) comprend un engrenage planétaire.

9. Agencement de volant d'inertie selon l'une quelconque des revendications précédentes, dans lequel des ailettes (57) du volant d'inertie (5) sont configurées pour agir en tant qu'un ventilateur.

10. Agencement de volant d'inertie selon l'une quelconque des revendications précédentes, dans lequel le périmètre du volant d'inertie (5) est doté de dents pour permettre à un capteur de vitesse de mesurer la vitesse.
